# EUROPEAN PATENT SPECIFICATION

(11) **EP 0 965 266 B1**
(45) Date of publication and mention of the grant of the patent: **30.10.2002**
(21) Application number: 99201960.4
(22) Date of filing: 18.06.1999
(51) Int. Cl.: A01K 31/22

(54) **Device for keeping poultry**
Vorrichtung zum Halten von Geflügel.
Dispositif pour l'élevage de volailles

(30) Priority: 19.06.1998 NL 1009455
(43) Date of publication of application: 22.12.1999
(73) Proprietor: Jansen Holding B.V., 3771 MB Barneveld (NL)
(72) Inventor: Jansen, Albrecht Hendrik, 3772 MC Barneveld (NL)
(74) Representative: Land, Addick Adrianus Gosling

(56) References cited:
- CH-A- 665 749
- CH-A- 670 032
- GB-A- 661 258
- BORCHERT: "Ein 2-Etagen-Laufstall für Legehennen" LANDTECHNIK, vol. 40, no. 6, June 1985 (1985-06), pages 267-269, XP002065271 Lehrte (DE)

## Description

The present invention relates to a device and method for keeping poultry and in particular to a device for keeping laying hens and broiler hens.

Environmental welfare housing is known for keeping poultry in which laying nests are provided. In this laying nest the poultry lays eggs in a relatively dark, sheltered and substantially draught-free environment. For the welfare of the poultry a free-range floor on which the poultry can forage is provided adjacently of or on either side of such a laying nest. In addition, separate racks of a tier-system are provided which consist in many cases of grids or slats arranged at different heights, on which the poultry can rest and where the poultry consumes drink and food.

A drawback of such a device with diverse racks, free-range floor and laying nests is that when a fowl needs to lay an egg it flies from a rack to the laying nest, whereby considerable loss occurs because the poultry is injured. The flying of the poultry causes increased food consumption, which not only increases costs but also increases the quantity of excrement produced by the poultry. It also produces a considerable amount of dust, which is unhealthy for human and animal. It is also possible for the poultry to get from the free-range floor or free-range area to the laying nest via a detour. A fowl will in such a case have a tendency to remain on the free-range floor and forgo a visit to the laying nest, whereby a large number of out-of-nest eggs will be laid on the free-range floor. A drawback hereof is that picking up such out-of-nest eggs is labour-intensive. Such out-of-nest eggs moreover come to lie in the poultry excrement deposited on the free-range floor, which hampers collection and requires an additional cleaning. A further drawback is that the use of separate laying nests, free-range floors and racks requires a large house floor area per fowl.

From the British patent specification GB 661258 is known a house, wherein a number of walking sections and a number of laying sections are fixed against the walls thereof. A drawback of this house is that the walking sections and the laying nests must be fixed separately to the house walls, which is labour-intensive and therefore very expensive.

In the article by Borchert entitled "Ein 2-Etagen-Laufstall für Legehennen", Landtechnik, vol 40, no 6, June 1985 (1985-06), pages 267-269, a poultry house is disclosed with one or more laying nest sections and walking sections which however are arranged separately from the laying nests.

CH 670 032 A5 discloses a system comprising walking sections and laying sections arranged on a frame. The layings sections are formed by a left laying section which has its entrance at the left side, and a separate right laying section, which has its entrance at the right side, while between the two laying sections a corridor is provided. This corridor is provided to enable a person to collect the nest eggs. The free range area at the bottom of the frame is provided with a drink supply and a food supply. A drawback of this system is that it is bulky and the fowl has to cover relatively large distances when moving between walking sections, which may even cause the fowl to fly. A further drawback is that the dunking- and feed lines are arranged both on the frame and at the free-range area. This means that the poultry has no incentive to stop foraging and leave the free-range area to dunk or to eat and consequently to be tempted to enter the laying nests.

The object of the present invention is to obviate the above stated drawbacks.

This object is achieved according to the invention in a system for keeping poultry, according to claim 1.

Due to the centrally arranged two-entrance laying nest, the construction according to the invention, is compact. This implies that moving between walking sections can be achieved by jumping from one section to 5 the other (covering one jump distance at the most) so as to prevent flying (which can cause injury). The compact construction also forces the fowl to approach the laying nest at a very close distance, which in turn results in an improved visit of the laying nest section and consequently less out-of-nest eggs.

The centrally arranged laying section enables a compact construction, which not only reduces the required housing floor area per fowl, but also ensures that the fowl can enter higher or lower walking sections without the necessity of flying and that the fowl is forced to pass closely the laying nest in order to tempt them to lay their eggs inside the nests.

Moreover, by arranging the drink- and/or feedline only on the frame a constant poultry transport is ensured from the top of the house to the bottom and form the bottom to the top and consequently an improved visit of the laying section is achieved.

By combining walking sections of the rack and the laying section or laying nest, a fowl is forced to pass a laying section when walking to one of the walking sections or when walking from the one walking section to the other, whereby the fowl will be tempted to lay an egg in the laying nest instead of outside it. The laying section and the walking sections of the device are arranged according to the invention on a separate frame instead of for instance on the walls of a poultry house.

The walking sections are arranged at two or more different heights on the frame. A fowl can hereby enter a higher or lower walking section as desired without the necessity of flying. It is furthermore not tempted to forage without paying a visit to a laying nest.

The device comprises at least one feed line for supplying food, wherein the feed line is arranged higher on the frame than the laying section and the device comprises at least one drinking line for supplying drink, wherein the drinking lines are arranged higher on the frame than the laying section. A fowl is hereby forced to pass the laying section, or at least come into the vicinity thereof, when it has need of food or drink during foraging. Conversely, when a fowl has consumed food and drink it is forced to move past the laying section when it feels the need to begin foraging. As a result the fowl will lay its eggs substantially in the laying section and the laying of out-of-nest eggs outside this laying section is prevented as far as possible.

Folding means are preferably arranged on one or more of the walking sections for folding up at least a part of the walking sections. In the folded-up situation sufficient space is thus created for cleaning of the free-range area or floor situated below and adjacently of the walking section. The folding means preferably comprise hinge means along which the foldable part of a walking section can pivot as well as lifting means for raising and lowering the foldable part of the walking sections.

Air discharge or air supply means are preferably arranged below the lowest walking section of the device for discharging respectively supplying ventilating air along the floor. Since poultry has a tendency to give up laying eggs when situated in a draughty environment, supply and/or discharge of ventilating air over the free-range area provided on the floor of the housing prevents laying of eggs there as far as possible. The supply and discharge of ventilating air over the floor of the environmental welfare house moreover results in drying of the excrement deposited on the free-range floor. The production of ammonia is hereby reduced, the volume taken up by the excrement is decreased and the excrement can be removed in simple manner.

The laying sections are arranged centrally in the frame and the endless conveyor of the laying section is preferably positioned in the middle thereof.

According to a further preferred embodiment manure conveyor ventilating means are arranged on the frame for guiding ventilating air over a manure discharge conveyor, wherein the manure conveyor ventilating means preferably comprise one or more pipes provided with ventilating openings and extending in longitudinal direction of the frame. The ventilating openings are herein arranged at positions in the pipes such that a suitable ventilation flow is guided over the associated manure conveyor.

According to a further preferred embodiment the frame comprises a number of support members, such as for instance legs or uprights, with which the device can be freely disposed in a poultry house. Owing to this self-supporting embodiment of the device it can be readily set up in a poultry house, wherein irrespective of the type of house use can be made of pre-fabricated elements, which saves labour and cost.

According to a further preferred embodiment the frame, the walking sections, the laying section and the food and/or drink line are integrated. Such an embodiment is advantageous since the nest visiting of the poultry can thereby be further guided and enhanced. A further reduction in the required housing floor area per fowl is moreover realized.

Further advantages, features and the like of the present invention will be elucidated with reference to the figures, in which:
figure 1 shows a view of a preferred embodiment of the device;
figure 2 shows a cross-section through the preferred embodiment of figure 1;
figure 3 is view of a preferred embodiment of a feed line;
figure 4 is view of a preferred embodiment of a drink line; and
figure 5 shows a view of another preferred embodiment of the device.

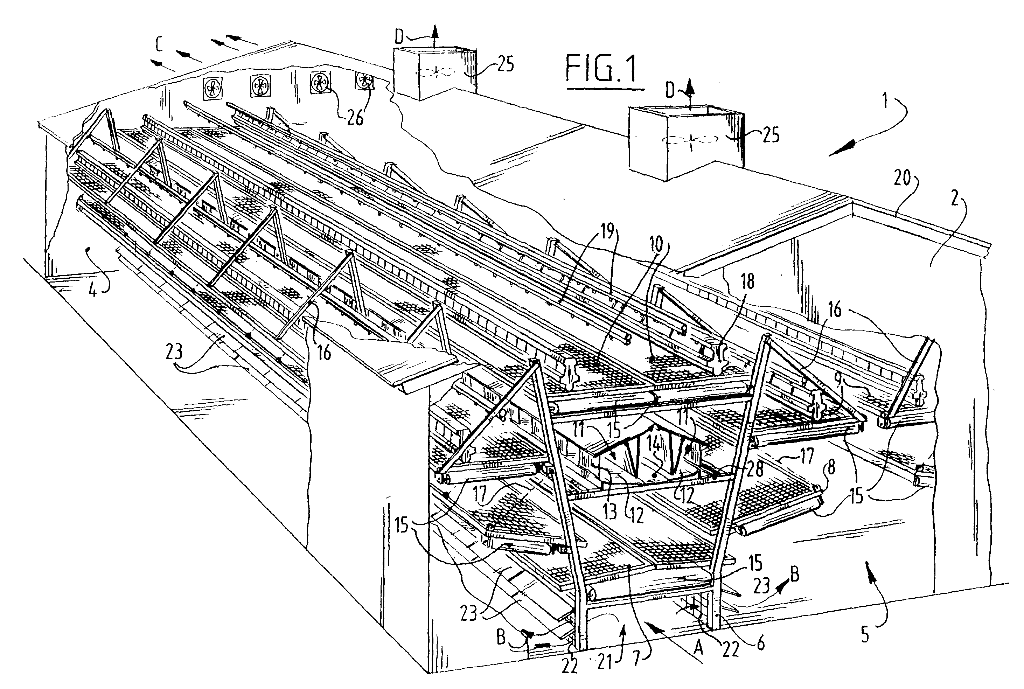

The preferred embodiment of the device depicted in figure 1 shows an environmental welfare house 1 which is built up of two side walls 3, a front wall 2, a rear wall 4 and a roof 20. Arranged in environmental welfare house 1 is a frame 6, a central part of which is provided with a lower central walking section 7, a middle central walking section 28 and an upper central walking section 10. Arranged on either side of the frame are lower walking sections 8 and upper walking sections 9 which are fixed to frame 6 at a height respectively between the lower central walking section 7 and the middle central walking section 28 and at a height between the middle central walking section 28 and the upper central walking section 10. An elongate laying section or elongate laying nest 11 is arranged on the middle central walking section 28. Laying nest 11 consists of two sloping grass strips 12 on each of which poultry take up position to lay eggs. After the egg has been laid it rolls over sloping grass strip 12 to a centrally arranged endless egg conveyor 14 which transports the egg to a collecting table or the like (not shown). The entrances to a laying nest 11 are partially closed off with hanging red-coloured flaps 13 so that a fowl lays an egg in comfortable and sheltered manner, i.e. without draught and excessive amounts of light.

Walking sections 7, 28, 10, 8, 9 are preferably grids which are provided with recesses such that the excrement of the poultry drops downward through these recesses. Walking sections 7, 28, 10, 8, 9 are preferably provided on the underside of endless manure discharge conveyors 15, so that excrement which has dropped down is transported to one or more manure containers (not shown).

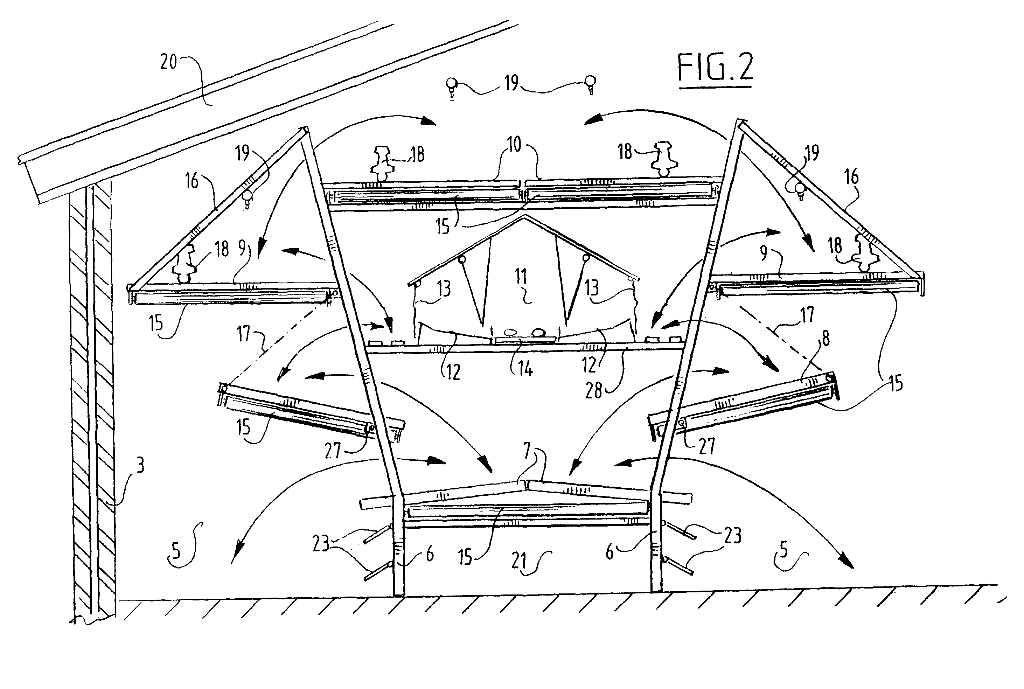

Indicated with arrows in figure 2 is how the poultry moves from free-range area 5 via walking sections 7, 8, 28, 9 to the upper central laying section 10 and vice versa without flying. The drawings show clearly that during this movement from free-range area 5 to upper walking section 10 the poultry is forced to pass laying nest 11 or at least come in the vicinity thereof.

Assuming that poultry has on the one hand a need to forage and on the other a need for food and drink, free-range area 5 is situated on the floor of the house and feed lines 18 and drink lines 19 are situated at the top of the house, and preferably on upper central section 10 and upper walking section 9. This ensures a constant poultry transport from the top of the house to the bottom and from the bottom to the top.

In order to limit the desire to lay eggs on free-range floor 5 ventilating air is supplied via a ventilating duct 21 (arrow A) arranged on the frame below the lower central walking section 7 and via grids 22 arranged in frame 6 (arrow B). The multiple valves 23 firstly provide a correct distribution of the ventilating air along the length of the house and secondly an air flow directed at free-range surface 5. An air flow is hereby created above the ground or free-range floor 5 whereby the poultry is not tempted to begin laying eggs during foraging. This air flow moreover ensures a rapid drying of the poultry excrement deposited on free-range floor 5. This has the advantage that the production of ammonia in the environmental welfare house remains within limits. Dried manure can moreover be removed more easily than manure which is still moist. As alternative to grids 22 with multiple valves 23, inlet valves can be arranged in the ventilation duct which are provided with butterfly valves for control of the ventilation air flow rate. Finally, in roof 20 and rear wall 4 of house 1 are arranged respective air discharge openings 25 and 26 via which ventilating air can be discharged.

The upper walking sections 9 are directly fixed on one side to frame 6 and connected on the other side to frame 6 via connecting arms 16. In order to further facilitate cleaning of free-range floor 5, walking sections 8 can be folded upwards. In this embodiment the walking sections 8 are arranged for this purpose on frame 6 by means of hinges 27 and walking sections 8 can be folded up by operating lifting chains or cables 17 arranged on the ends of walking section 8. In the folded-up situation a space is thus created above free-range floor 5 such that free-range floor 5 can be reached and cleaned in simple manner.

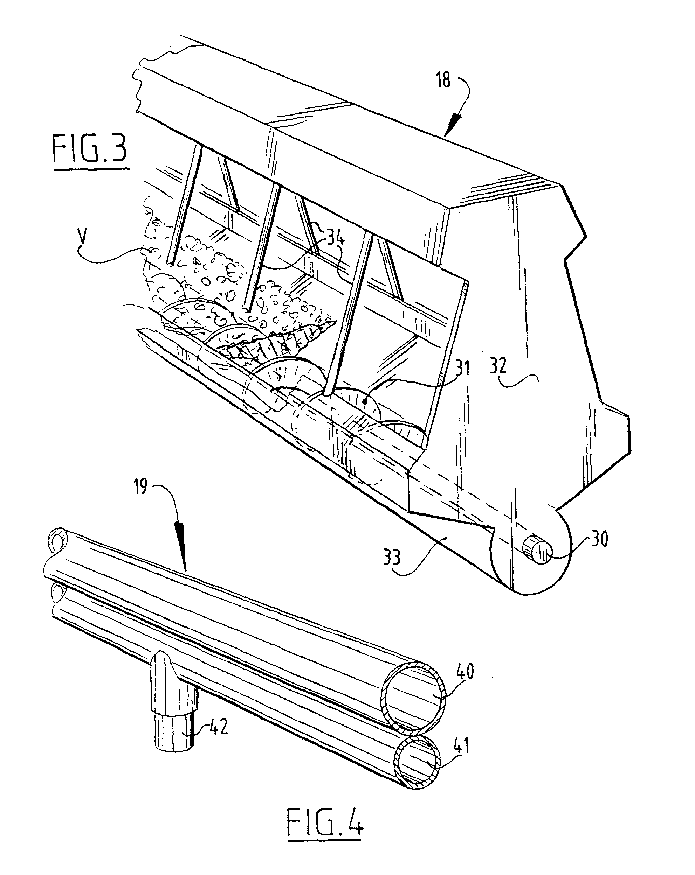

Shown in figure 3 is a preferred embodiment of a feed line 18 for poultry. Rotatable in a container 32 is a shaft 30 which is driven by an electric motor (not shown). Arranged on this shaft 30 is a screw 31 which displaces food V along a trough 33 in container 32. Container 32 is provided with bars 34 arranged at a mutual distance such that the space remaining open therebetween is sufficient for poultry to access food.

Figure 4 shows a preferred embodiment of a drink line 19. This drink line 19 consists of a water supply pipe 41 which is mounted on a fixing pipe 40. Arranged at regular distances on water supply pipe 41 are drinking nipples 42 where the poultry can consume water.

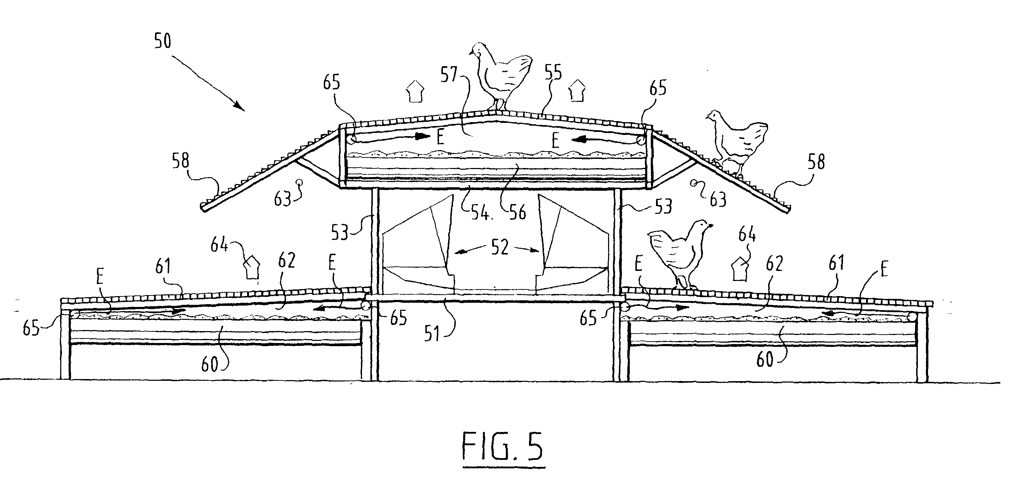

Shown in figure 5 is a further embodiment of an environmental welfare house 50. Laying nests 52 are arranged on the horizontally extending plate 51. Plate 51 is supported by uprights 53, wherein a second platform 54 is arranged on uprights 53, at a higher level however than laying nests 52. On this platform 54 are arranged grids 55 on which the poultry can walk. Grids 55 are embodied such that they allow passage of excrement dropped by the poultry into space 57, and space 57 is provided on the underside with an endless manure conveyor 56 which then carries away the excrement. Arranged on either side of platform 54 are grids 58 along which the poultry can move in order to reach the grids.

Grids 61 are also arranged on either side of uprights 53, although at a lower height than above mentioned grids 55. These grids 61 are also formed such that excrement falls into a space 62 and can be discharged via an endless manure discharge conveyor 60 provided on both sides.

As shown in the figure, in this preferred embodiment the laying nest 52 is placed centrally in the tier-system between grids or slats, which provides a great gain in space and a stimulation for nest visiting. It can moreover be concluded from the figure that due to the manner of placing drink lines 63 and feed lines 64 the poultry is stimulated when moving between grids 55, 58, 61 to move past laying section 52, whereby the poultry is tempted to lay eggs in laying section 52.

As is also the case in the embodiment discussed above, the embodiment of figure 5 has a self-supporting frame which can be freely disposed on the floor of a house using uprights, without additional measures such as fixing to walls or to the roof of the house being required.

Also shown in figure 5 are air pipes 65 which are provided with a large number of small holes (not shown) arranged at a position such that ventilation air flowing through pipes 65 is guided via the openings in the direction of arrows E over manure conveyors 60 and 56 in order to dry the manure situated on manure conveyors 60, 56.

In the embodiment of figure 2 the laying nest 11 - in the embodiment of figure 5 this is laying nest 51 - is provided with a sloping mat 12 which ensures that the eggs roll onto egg conveyor 14. Laying nest 11, 51 is embodied such that egg conveyor 14 is situated, as seen in the direction of movement of a chicken, behind the left respectively right-hand nest. In the shown embodiments the egg conveyors associated with the right respectively left-hand nest are moreover combined to form a single egg conveyor 14, which simplifies the construction of the device.

It has been found from tests that an egg conveyor behind the nest instead of in front of it and the inclination of mat 12 associated therewith produces markedly better visiting of the nest, since during a nest visit the chicken sits with its head towards the nest entrance, which provides the chicken with a better natural defensive stance.

The present invention is not limited to the above described preferred embodiments thereof; the rights sought are defined by the following claims, within the scope of which many modifications can be envisaged.

## Claims

1. System for keeping poultry, comprising a free range area (5) and a device comprising:
- a frame (6) ;
- at least one laying section (11,52) for laying eggs, the laying section being arranged on the frame (6) ;
- at least one feed line (18,64) and/or at least one drinking line (19,63) for supplying respectively food and/or drink;
- at least two walking sections (7,28,10,8,9;55,58,61), extending left from the frame (6) and arranged at different heights on the frame;
- at least two walking sections (7,28,10,8,9;55,58,61), extending right from the frame and arranged at different heights on the frame; **characterized in that** the laying section (11,52) is arranged centrally between the left and right walking sections, such that when moving between the left walking sections a fowl passes or at least closely approaches a left entrance of the laying section and when moving between the right walking sections a fowl passes or at least closely approaches a right entrance of the laying section; and **in that** each drinking line (19) and/or feed line (18) is arranged on the frame (6) for ensuring a poultry transport between the walking sections and the free range area (5) so as to guide the poultry past the laying section (11).

2. System as claimed in claim 1, wherein drinking line (19) is arranged on a position higher on the frame than the laying section.

3. System as claimed in claim 1 or 2, wherein the feed line (18) is arranged on a position higher on the frame than the laying section.

4. System as claimed in any of the foregoing claims, wherein the frame (6), the walking sections (7,28,10,8,9;55,58,61), the laying section (11,52) and the food and/or drink line are integrated.

5. System as claimed in any of the foregoing claims, wherein the frame comprises a number of support members with which the device can be freely disposed in a poultry house.

6. System as claimed in any of the foregoing claims, wherein the frame, the walking sections and the laying section are manufactured of prefabricated elements.

7. System as claimed in claim 1, wherein folding means (27,17) are arranged on one or more walking sections for folding up at least a part of the walking sections.

8. System as claimed in claim 7, wherein the folding means comprise hinge means (27) along which the foldable part of the walking sections can pivot and also comprise lifting means (17) for raising and lowering the foldable part of the walking sections.

9. System as claimed in any of the foregoing claims, wherein an endless manure discharge conveyor (15) is arranged under at least one walking section.

10. System as claimed in any of the foregoing claims, wherein at least one endless egg discharge conveyor (14) is arranged under the laying section.

11. System as claimed in any of the claims 1-10, wherein air discharge means (25,26) are arranged below the lowest walking section for supplying the ventilating air along the floor.

12. Syystem as claimed in any of the claims 1-11, wherein air supply means are arranged below the lowest walking section for discharging the ventilating air along the floor.

13. System as claimed in any of the foregoing claims, wherein a screen is arranged on the frame.

14. System as claimed in claim 9, wherein manure conveyor ventilating means are arranged on the frame for guiding ventilating air over a manure discharge conveyor (56,60).

15. System as claimed in claim 14, wherein the manure conveyor ventilating means comprise one or more pipes (65) provided with ventilating openings and extending in longitudinal direction of the frame.

16. System as claimed in claim 10, wherein the endless egg discharge conveyor (14) is arranged centrally in the laying section.

17. Method for keeping poultry, wherein the system as claimed in any of the foregoing claims is applied.

## Patentansprüche

1. System zum Halten von Geflügel, umfassend eine Freibereichsfläche (5) und eine Vorrichtung mit:
- einem Rahmen (6);
- mindestens einem Legeabschnitt (11, 52) zum Legen von Eiern, wobei der Legeabschnitt auf dem Rahmen angeordnet ist;
- mindestens einer Futterleitung (18, 64) und/oder mindestens einer Getränkeleitung (19, 63) zum jeweiligen Zuführen von Futter und/oder Getränk;
- mindestens zwei Gehabschnitten (7, 28, 10, 8, 9; 55, 58, 61), die sich links vom Rahmen (6) erstrecken und bei unterschiedlichen Höhen auf dem Rahmen angeordnet sind;
- mindestens zwei Gehabschnitten (7, 28, 10, 8, 9; 55, 58, 61), die sich rechts vom Rahmen (6) erstrecken und bei unterschiedlichen Höhen auf dem Rahmen angeordnet sind;
**dadurch gekennzeichnet, dass** der Legeabschnitt (11, 52) zentral zwischen den linken und rechten Gehabschnitten angeordnet ist, so dass ein Huhn beim Bewegen zwischen den linken Gehabschnitten einen linken Eingang des Legeabschnitts passiert oder zumindest an diesen nahe herankommt, und bei Bewegen zwischen den rechten Gehabschnitten ein Huhn einen rechten Eingang des Legeabschnitts passiert oder zumindest nahe an diesen herankommt; und dass jede Getränkeleitung (19) und/oder Futterleitung (18) auf dem Rahmen (6) angeordnet ist zum Sicherstellen eines Geflügeltransports zwischen den Gehabschnitten und der Freibereichsfläche (5), damit das Geflügel an dem Legeabschnitt (11) vorbei geleitet wird.

2. System wie im Anspruch 1 beansprucht, wobei die Getränkeleitung (19) an einer Stelle angeordnet ist, die auf dem Rahmen höher liegt als der Legeabschnitt.

3. System wie im Anspruch 1 oder 2 beansprucht, wobei die Futterleitung (18) an einer Stelle angeordnet ist, die auf dem Rahmen höher liegt als der Legeabschnitt.

4. System wie in irgend einem der vorangehenden Ansprüche beansprucht, wobei der Rahmen (6), die Gehabschnitte (7, 28, 10, 8, 9; 55, 58, 61), der Legeabschnitt (11, 52) und die Futter- und/oder Getränkeleitung eine Einheit bilden.

5. System wie in irgend einem der vorangehenden Ansprüche beansprucht, wobei der Rahmen eine Anzahl von Trägerelementen umfasst, mit denen die Vorrichtung frei in einem Geflügelhaus eingerichtet werden kann.

6. System wie in irgend einem der vorangehenden Ansprüche beansprucht, wobei der Rahmen, die Gehabschnitte und der Legeabschnitt aus vorgefertigten Elementen hergestellt sind.

7. System wie im Anspruch 1 beansprucht, wobei eine Klappeinrichtung (27, 17) auf einem oder mehreren Gehabschnitten zum Hochklappen mindestens eines Teils der Gehabschnitte angeordnet ist.

8. System wie im Anspruch 7 beansprucht, wobei die Klappeinrichtung eine Gelenkeinrichtung (27) umfasst, entlang welcher das klappbare Teil der Gehabschnitte gedreht werden kann, und ebenso eine Anhebeeinrichtung (17) umfasst zum Anheben und Erniedrigen des klappbaren Teils der Gehabschnitte.

9. System wie in irgendeinem der vorangehenden Ansprüche beansprucht, wobei ein Endlos-Dungentfernungsförderelement (15) unter mindestens einem Gehabschnitt angeordnet ist.

10. System wie in irgendeinem der vorangehenden Ansprüche beansprucht, wobei mindestens ein Endlos-Eientfernungsförderelement (14) unter dem Legeabschnitt angeordnet ist.

11. System wie in irgendeinem der Ansprüche 1 bis 10 beansprucht, wobei eine Ablufteinrichtung (25, 26) unter dem untersten Gehabschnitt zum Zuführen der Ventilationsluft entlang des Bodens angeordnet ist.

12. System wie in irgendeinem der Ansprüche 1 bis 11 beansprucht, wobei eine Luftzufuhreinrichtung unterhalb des untersten Gehabschnitts zum Entfernen der Ventilationsluft entlang des Bodens angeordnet ist.

13. System wie in irgendeinem der vorangehenden Ansprüche beansprucht, wobei ein Schirm auf dem Rahmen angeordnet ist.

14. System wie im Anspruch 9 beansprucht, wobei eine Dungförderelement-Ventilationseinrichtung auf dem Rahmen angeordnet ist zum Leiten von Ventilationsluft über ein Dungentfernungsförderelement (56, 60).

15. System wie in Anspruch 14 beansprucht, wobei die Dungförderelement-Ventilationseinrichtung ein oder mehrere Rohre (65) umfasst, welche mit Ventilationsöffnungen versehen sind und sich in Längsrichtung des Rahmens erstrecken.

16. System wie im Anspruch 10 beansprucht, wobei das Endlos-Eientfernungsförderelement (14) zentral im Legeabschnitt angeordnet ist.

17. Verfahren zum Halten von Geflügel, wobei das wie in irgendeinem der vorangehenden Ansprüche beanspruchte System angewandt wird.

## Revendications

1. Dispositif pour l'élevage de volailles comprenant une zone de passage libre (5) et un dispositif comprenant :
- un cadre (6);
- au moins une section de ponte (11,52) pour la ponte d'oeufs, la section de ponte étant disposée sur le cadre (6);
- au moins une canalisations d'alimentation (18,64) et/ou au moins une conduite d'amenée de boisson (19,63) pour amener respectivement de la nourriture et/ou une boisson;
- au moins deux sections de circulation (7,28,10, 8,9;55,58,61) qui s'étendent à gauche à partir du cadre (6) et sont disposées à différentes hauteurs sur le cadre;
- au moins deux sections de circulation (7,28,10, 8,9;55,58,61), qui s'étendent à droite à partir du cadre et sont disposées à différentes hauteurs sur le cadre;
**caractérisé en ce que** la section de ponte (11,52) est disposée d'une manière centrale entre les sections de circulation de gauche et de droite, de telle sorte que lorsqu'elle se déplace entre les sections de circulation de gauche, une volaille franchit ou tout au moins se rapproche très près d'une entrée de droite de la section de ponte, et lorsqu'elle se déplace entre les sections de circulation de droite, une volaille franchit ou tout au moins se rapproche très près d'une entrée de gauche de la section de ponte; et que chaque canalisation d'amenée de boisson (19) et/ou chaque canalisation d'amenée de nourriture (18) est disposée sur le cadre (6) de manière à garantir un transport de volailles entre les sections de circulation et la zone de passage libre (5) pour guider les volailles au-delà de la section de ponte (11).

2. Dispositif selon la revendication 1, dans lequel la canalisation d'amenée de boisson (19) est disposée sur le cadre dans une position plus élevée que la section de ponte.

3. Dispositif selon la revendication 1 ou 2, dans lequel la canalisation d'alimentation (18) est disposée sur le cadre dans une position plus élevée que la section de ponte.

4. Dispositif selon l'une quelconque des revendications précédentes, dans lequel le cadre (6), les sections de circulation (7,28,10,8,9;55,58,61), la section de ponte (11,52) et la canalisation d'amenée de nourriture et/ou la canalisation d'amenée de boisson sont intégrées

5. Dispositif selon l'une quelconque des revendications précédentes, dans lequel le cadre comprend un certain nombre d'éléments de support, à l'aide desquels le dispositif peut être librement disposé dans un poulailler.

6. Dispositif selon l'une quelconque des revendications précédentes, dans lequel le cadre, les sections de circulation et la section de ponte sont formés d'éléments préfabriqués.

7. Dispositif selon la revendication 1, dans lequel des moyens de pliage (27,17) sont disposés sur une ou plusieurs sections de circulation pour réaliser un pliage d'au moins une partie des sections de circulation.

8. Dispositif selon la revendication 7, dans lequel les moyens de pliage comprennent les moyens d'articulation (27), le long desquels la partie repliable des sections de circulation peut pivoter, et comprennent également des moyens de levage (17) pour soulever et abaisser la partie repliable des sections de circulation.

9. Dispositif selon l'une quelconque des revendications précédentes, dans lequel un convoyeur (15) de refoulement sans fin d'engrais est disposé au-dessous d'au moins une section de circulation.

10. Dispositif selon l'une quelconque des revendications précédentes, dans lequel au moins un convoyeur sans fin (14) d'évacuation des oeufs est disposé au-dessous de la section de ponte.

11. Dispositif selon l'une quelconque des revendications 1 à 10, dans lequel des moyens (25,26) d'évacuation d'air sont disposés au-dessous de la section de circulation la plus basse pour envoyer de l'air de ventilation le long du plancher.

12. Dispositif selon l'une quelconque des revendications 1 à 11, dans lequel des moyens d'alimentation en air sont disposés au-dessous de la section de circulation la plus basse pour l'évacuation de l'air de ventilation le long du plancher.

13. Dispositif selon l'une quelconque des revendications précédentes, dans lequel une grille est disposée sur le cadre.

14. Dispositif selon la revendication 9, dans lequel des moyens de ventilation du convoyeur d'engrais sont disposés sur le cadre de manière à guider l'air de ventilation au-dessus d'un convoyeur de refoulement d'engrais (56, 60).

15. Dispositif selon la revendication 14, dans lequel les moyens de ventilation du convoyeur d'engrais comprennent un ou plusieurs conduits 65 comportant des ouvertures de ventilation et s'étendant dans la direction longitudinale du cadre.

16. Dispositif selon la revendication 10, dans lequel le convoyeur sans fin (14) d'évacuation des oeufs est disposé en position centrale dans la section de ponte.

17. Procédé pour l'élevage de volailles, dans lequel on utilise le dispositif tel que revendiqué dans l'une quelconque des revendications précédentes.
